Europäisches Patentamt

European Patent Office

Office européen des brevets

(19)

(11) Veröffentlichungsnummer: **0 045 831**
**B1**

# (12) EUROPÄISCHE PATENTSCHRIFT

(45) Veröffentlichungstag der Patentschrift:
30.05.84

(21) Anmeldenummer: 81102154.2

(22) Anmeldetag: 23.03.81

(51) Int. Cl.³: **G 02 F  1/01**, G 01 D  11/28,
G 09 F  13/18

(54) **Passive elektrooptische Anzeigevorrichtung.**

(30) Priorität: 08.08.80  DE 3030064

(43) Veröffentlichungstag der Anmeldung:
17.02.82 Patentblatt 82/7

(45) Bekanntmachung des Hinweises auf die Patenterteilung:
30.05.84 Patentblatt 84/22

(84) Benannte Vertragsstaaten:
CH DE FR GB IT LI

(56) Entgegenhaltungen:
FR - A - 2 065 693
GB - A - 2 003 289
US - A - 3 491 245
US - A - 3 561 145
US - A - 3 851 460

(73) Patentinhaber: **VDO Adolf Schindling AG,
Gräfstrasse 103, D-6000 Frankfurt/Main (DE)**

(72) Erfinder: **Preiss, Bernd, Fichtestrasse 33,
D-6238 Hofheim (DE)**

(74) Vertreter: **Könekamp, Herbert, Dipl.-Ing., Sodener
Strasse 9, D-6231 Schwalbach (DE)**

## Beschreibung

Die Erfindung bezieht sich auf eine passive elektrooptische Anzeigevorrichtung mit einer Anzeigezelle, die aus zwei im Abstand zueinander angeordneten transparenten Platten besteht, zwischen denen ein Aktivbestandteil eingeschlossen ist, der an definierten Stellen der Anzeigezellenebenen Anzeigesymbole darstellend elektrisch zwischen zwei optisch verschiedenen Zuständen umschaltbar ist, mit einer Beleuchtungseinrichtung, bestehend aus einem sich über die Ebene der Anzeigezelle erstreckenden Lichtleiter, in den vom Seitenbereich her Licht eingeleitet wird, und der auf einer seiner zur Anzeigezellenebene parallelen Seiten mit einer lichtstreuenden Struktur versehen ist, sowie mit einem auf der dem Betrachter abgewandten Seite der Anzeigezelle angeordneten Reflektor.

Derartige bekannte Anzeigevorrichtungen besitzen den Lichtleiter auf der dem Beobachter abgewandten Seite der Anzeigezelle, wobei der Reflektor halb lichtdurchlässig und zwischen Lichtleiter und Anzeigezelle angeordnet ist.

Da bei diesen Anzeigevorrichtungen nur ein Teil des Lichts der in den Lichtleiter hineinstrahlenden Lichtquelle durch den Reflektor hindurch die Anzeigezelle beleuchten kann, sind die Anzeigesymbole nur mit relativ schwachem Kontrast vom Betrachter zu sehen.

Es ist daher Aufgabe der Erfindung, eine Anzeigevorrichtung nach dem Oberbegriff zu schaffen, bei der die Anzeigesymbole klar und kontraststark vom Beobachter erkennbar sind.

Diese Aufgabe wird erfindungsgemäss dadurch gelöst, dass der Lichtleiter auf der dem Betrachter zugewandten Seite der Anzeigezelle angeordnet ist und auf seiner dem Betrachter zugewandten Fläche mit einer Beschichtung versehen ist, die einen starken Kontrast zu den nicht angesteuerten Anzeigesymbolen besitzt und die in den Bereichen der von der Anzeigezelle darstellbaren Anzeigesymbole mit einem bestimmten, einem Beobachter als kontrastierende Umrandung der angesteuerten Anzeigesymbole erscheinenden Abstand zur Aussenkontur der Anzeigesymbole ausgespart ist, wobei die lichtstreuende Struktur etwa deckungsgleich zur Beschichtung angeordnet ist. Durch diese erfindungsgemässe Ausbildung wird der Bereich hinter der Ebene der Anzeigesymbole praktisch ohne Schattenbildung durch die Anzeigesymbole angestrahlt. Die Umrandung der Aussenkontur der Anzeigesymbole mit einem bestimmten, vorteilhafterweise relativ geringem Abstand, durch die kontraststarke Beschichtung bewirkt eine kontrastierende Umrandung der Anzeigesymbole und hebt diese dadurch für den Beobachter scharf abgegrenzt hervor.

Die kontraststarke Beschichtung ist dabei im Falle der dunklen Darstellung der Anzeigesymbole vor leuchtendem Hintergrund vorzugsweise matt-schwarz, während sie bei leuchtenden Anzeigesymbolen mit dunklem Hintergrund vorzugsweise weiss ist.

Auch bei ausgeschalteter Beleuchtung, wenn von aussen Licht durch die von der Beschichtung ausgesparten Felder in die Anzeigezelle strahlt und vom Reflektor reflektiert wird, wird die gleiche scharf abgegrenzte Ablesbarkeit der Anzeigesymbole erreicht.

Eine Schattenbildung der Anzeigesymbole in einer zur Anzeigeebene parallelen Ebene, die durch Parallaxe zu einem Ablesefehler führen würde, wird durch die erfindungsgemässe Anzeigevorrichtung vermieden.

Weiterhin kann durch einfaches Abnehmen des Lichtleiters der Bereich der Lichtquelle zugänglich gemacht werden und so bei einem Defekt der Lampe diese ausgewechselt werden. Ein Ausbau der gesamten Anzeigezelle oder eine Zugangmöglichkeit von der Rückseite her ist nicht erforderlich. Damit kann der Aufbau der Anzeigevorrichtung auch relativ flach gestaltet werden.

Ist die lichtstreuende Struktur an der dem Beobachter zugewandten Fläche des Lichtleiters angeordnet, so kann die lichtstreuende Struktur fast bis zu den Rändern der ausgesparten Sichtfelder der Beschichtung reichen, ohne dass durch den Lichtleiter geleitetes Licht durch die Sichtfelder nach aussen gestrahlt wird. Es strahlt somit nur das vom Reflektor reflektierte Licht nach aussen.

Die lichtstreuende Struktur kann durch eine lichtstreuende Folie gebildet sein, die z.B. auf einfache Weise auf den Lichtleiter aufklebbar ist.

In einer anderen Ausführungsform kann die lichtstreuende Struktur durch Ätzen der Fläche des Lichtleiters hergestellt sein.

Um eine optimale Ausnutzung des durch den Lichtleiter eingeleiteten Lichts zu erreichen, kann zwischen dem Lichtleiter und der kontraststarken Beschichtung eine Reflektorschicht angeordnet sein.

Ausführungsbeispiele der Erfindung sind in der Zeichnung dargestellt. Es zeigen:

Figur 1 einen Querschnitt durch eine erfindungsgemässe Anzeigevorrichtung,

Figur 2 eine Vorderansicht einer erfindungsgemässen Anzeigevorrichtung.

Die in den Figuren dargestellten passiven elektrooptischen Anzeigevorrichtungen weisen eine Anzeigezelle 1 auf, die aus zwei im Abstand zueinander angeordneten transparenten Platten 2 und 3 besteht, zwischen denen ein Aktivbestandteil eingeschlossen ist. Auf der dem Betrachter abgewandten Seite der Anzeigezelle ist ein Polarisator 4 und ein Reflektor 5 angeordnet.

Auf der anderen Seite der Anzeigezelle 1, die dem Reflektor abgewandt ist, ist ebenfalls ein Polarisator 6 angeordnet.

In einen vor diesem Polarisator 6 liegenden sich über die Betrachterebene der Anzeigezelle 1 erstreckenden Lichtleiter 7 wird vom Seitenbereich her von einer Lichtquelle 8 Licht eingestrahlt.

Dieses Licht wird durch die lichtstreuende Struktur 9 auf der dem Betrachter zugewandten Seite des Lichtleiters 7, die durch Ätzen hergestellt ist, diffus zum Reflektor 5 hingeleitet und von dort in Richtung zum Betrachter reflektiert.

Durch eine kontraststarke Beschichtung 10 des Lichtleiters 7 auf der dem Betrachter zugewandten Seite, die nur in den Bereichen der Anzeigesymbole 11 ausgespart ist, kann nur vom Reflektor 5 reflektiertes Licht im Bereich dieser Aussparungen 12 austreten. Zu diesem Zweck dient auch, dass die lichtstreuende Struktur 9 nur im Bereich der Beschichtung 10 ausgebildet ist.

Eine zwischen der lichtstreuenden Struktur 9 und der Beschichtung 10 angeordnete Reflektorschicht 13 reflektiert auch die durch die lichtstreuende Struktur 6 in Richtung zur Beschichtung 10 geleiteten Lichtstrahlen, so dass eine weitgehende Ausnutzung des von der Lichtquelle 8 ausgesandten Lichts erfolgt.

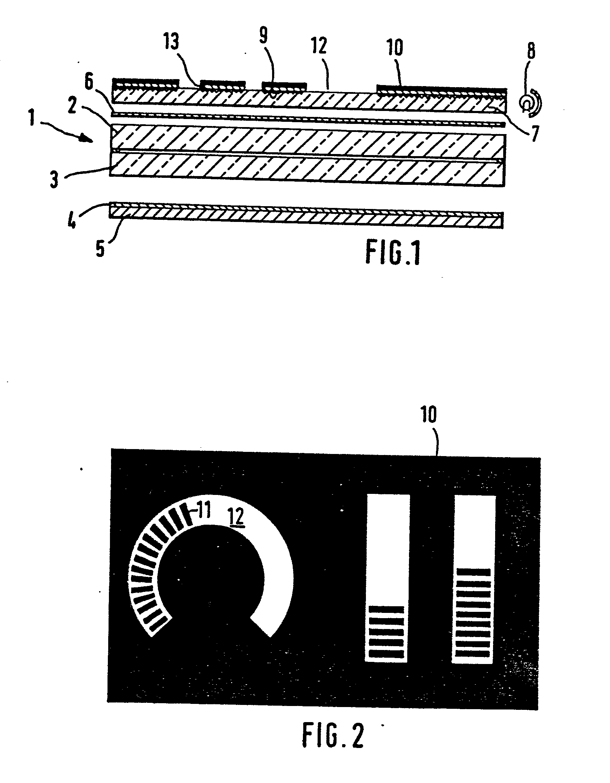

Bei der in Figur 2 dargestellten Anzeigevorrichtung ist deutlich, dass die Anzeigesymbole 11 mit starkem Kontrast zu erkennen sind.

## Patentansprüche

1. Passive elektrooptische Anzeigevorrichtung mit einer Anzeigezelle, die aus zwei im Abstand zueinander angeordneten transparenten Platten besteht, zwischen denen ein Aktivbestandteil eingeschlossen ist, der an definierten Stellen der Anzeigezellenebenen Anzeigesymbole darstellend elektrisch zwischen zwei optisch verschiedenen Zuständen umschaltbar ist, mit einer Beleuchtungseinrichtung, bestehend aus einem sich über die Ebene der Anzeigezelle erstreckenden Lichtleiter, in den vom Seitenbereich her Licht eingeleitet wird, und der auf einer seiner zur Anzeigezellenebene parallelen Seiten mit einer lichtstreuenden Struktur versehen ist, sowie mit einem auf der dem Betrachter abgewandten Seite der Anzeigezelle angeordneten Reflektor, dadurch gekennzeichnet, dass der Lichtleiter (7) auf der dem Betrachter abgewandten Seite der Anzeigezelle (1) angeordnet ist und auf seiner dem Betrachter zugewandten Fläche mit einer Beschichtung (10) versehen ist, die einen starken Kontrast zu den nicht angesteuerten Anzeigesymbolen besitzt und die in den Bereichen der von der Anzeigezelle (1) darstellbaren Anzeigesymbolen (11) mit einem bestimmten, einem Beobachter als kontrastierende Umrandung der angesteuerten Anzeigesymbole erscheinenden Abstand zur Aussenkontur der Anzeigesymbole ausgespart ist, wobei die lichtstreuende Struktur (9) etwa deckungsgleich zur Beschichtung (10) angeordnet ist.

2. Anzeigevorrichtung nach Anspruch 1, dadurch gekennzeichnet, dass die lichtstreuende Struktur (9) an der dem Betrachter zugewandten Fläche des Lichtleiters (7) angeordnet ist.

3. Anzeigevorrichtung nach einem der vorhergehenden Ansprüche, dadurch gekennzeichnet, dass die lichtstreuende Struktur durch eine lichtstreuende Folie gebildet ist.

4. Anzeigevorrichtung nach einem der Ansprüche 1 und 2, dadurch gekennzeichnet, dass die lichtstreuende Struktur (9) durch Ätzen der Fläche des Lichtleiters (7) hergestellt ist.

5. Anzeigevorrichtung nach einem der vorhergehenden Ansprüche, dadurch gekennzeichnet, dass zwischen dem Lichtleiter (7) und der kontraststarken Beschichtung (10) eine Reflektorschicht (13) angeordnet ist.

## Revendications

1. Appareil électrooptique d'indication passif comportant une cellule d'indication, qui se compose de deux plaques transparentes disposées à distance l'une de l'autre et entre lesquelles est interposée une partie active d'espacement, qui peut être commutée électriquement, en représentant des symboles d'indication en des endroits définis du plan de cellule d'indication, entre deux conditions optiquement différentes, un dispositif d'éclairement, se composant d'un conducteur de lumière s'étendant au-dessus du plan de la cellule d'indication et dans lequel de la lumière est introduite par une zone latérale, et qui est pourvu, sur un de ses côtés parallèles au plan de cellule d'indication, d'une structure de dispersion de lumière, ainsi que d'un réflecteur disposé sur le côté de la cellule d'indication qui est opposé à l'observateur, caractérisé en ce que le conducteur de lumière (7) est disposé sur le côté de la cellule d'indication (1) qui est opposé à l'observateur et est pourvu, sur sa surface tournée vers l'observateur, d'un revêtement (10) qui présente un fort contraste avec les symboles d'indication (11) non activés et qui, dans les zones des symboles d'indication (11) pouvant être représentées par la cellule d'indication (11), est évidé par rapport au contour extérieur des symboles d'indication (11) par un intervalle d'espacement déterminé, apparaissant pour un observateur comme une bordure de contraste des symboles d'indication activés (11), la structure (9) de dispersion de lumière étant disposée à peu près en coïncidence avec le revêtement (10).

2. Appareil d'indication selon la revendication 1, caractérisé en ce que la structure de dispersion de lumière (9) est disposée sur la surface du conducteur de lumière (7) qui est tournée vers l'observateur.

3. Appareil d'indication selon l'une des revendications précédentes, caractérisé en ce que la structure de dispersion de lumière est constituée par une feuille de dispersion de lumière.

4. Appareil d'indication selon l'une des revendications 1 et 2, caractérisé en ce que la structure de dispersion de lumière (9) est réalisée par décapage de la surface du conducteur de lumière (7).

5. Appareil d'indication selon l'une des revendications précédentes, caractérisé en ce qu'il est prévu une couche réfléchissante (13) entre le conducteur de lumière (7) et le revêtement de fort contraste (10).

## Claims:

1. Passive electro-optical indicating or display device having a display cell comprising two spaced-apart transparent plates between which an active component is enclosed which, representing display symbols at specific regions of the display cell planes, is adapted to be switched over electrically between two optically different states, having a lighting device comprising a light conductor which extends over the plane of the display cell and into which light can be introduced from the side, and which is provided at one of its sides parallel to the display cell plane with a light-diffusing structure, and also having a reflector which is arranged at that side of the display cell which is remote from the viewer, characterised in that the light conductor (7) is arranged at the side of the display cell (1) directed towards the viewer and at its surface directed towards the viewer is provided with a coating (10) which gives a strong contrast with the non-activated display symbols and which in the regions of the display symbols (11) representable by the display cell (1) is apertured with a specific spacing from the external contour of the display symbols, said spacing appearing to the viewer as a contrasting surrounding border about the activated display symbols, and the light-diffusing structure (9) is situated approximately in register with the coating (10).

2. Display device according to claim 1, characterised in that the light-diffusing structure (9) is arranged at that surface of the light conductor (7) which is directed towards the viewer.

3. Display device according to one of the preceding claims, characterised in that the light-diffusing structure is formed of a light-diffusing sheet or film.

4. Display device according to one of claims 1 and 2, characterised in that the light-diffusing structure (9) is produced by etching the surface of the light conductor (7).

5. Display device according to one of the preceding claims, characterised in that between the light conductor (7) and the strongly contrasting coating (10) a reflector layer (13) is arranged.

FIG.1

FIG.2